# EUROPEAN PATENT SPECIFICATION

(11) **EP 2 685 098 B1**
(45) Date of publication and mention of the grant of the patent: **01.04.2015**
(21) Application number: 12175747.0
(22) Date of filing: 10.07.2012
(51) Int. Cl.: F03D 11/00

(54) **Base frame structure for a wind turbine**
Basisrahmenstruktur für eine Windturbine
Structure de cadre de base pour éolienne

(43) Date of publication of application: 15.01.2014
(73) Proprietor: Siemens Aktiengesellschaft, 80333 München (DE)
(72) Inventor: Andersen, Mads Peter Zippor Leth, 8670 Låsby (DK); Brown, Mark, 8850 Bjerringbro (DK); Nielsen, Jacob Blach, 7442 Engesvang (DK); Stiesdal, Henrik, 5000 Odense C (DK)

(56) References cited:
- WO-A1-2010/137052
- WO-A1-2011/092565
- CN-A- 101 660 499
- DE-A1-102010 043 435
- FR-A1- 2 924 285

## Description

The invention relates to an improved base frame for a direct driven wind turbine.

A wind turbine transforms wind energy into electrical energy, see e.g. WO 2010/137052 and DE 10 2010 043 435.

The wind energy causes a rotation of the rotor of the wind turbine. The rotor of the wind turbine comprises a hub and at least one rotor blade mounted to the hub. The hub is connected rotatable to the nacelle. The nacelle comprises an electrical generator. The rotation of the hub is transferred to the generator and the generator transfers the rotational energy into electrical energy. The hub with the rotor blades and the rotor of the generator form the rotating part of the wind turbine.

The nacelle further comprises a base frame. The electrical generator is connected to one side of the base frame. The base frame is connected with a second side to the tower. The base frame is the structural component of the wind turbine that is capable of transferring the loads and the vibrations acting on the rotor of the wind turbine to the tower of the wind turbine.

The nacelle with the base frame is connected to the tower in a way that the nacelle can be rotated on the tower. A yaw system with yaw motors is capable of rotating the nacelle on the tower in a way that the rotor of the wind turbine faces the direction of the wind.

The nacelle of the wind turbine further comprises a support structure that carries several systems and components present in the nacelle. The systems and components are for example the electrical system, comprising the converter and the transformer, the cooling system or the control system.

The support structure is connected to the base frame of the wind turbine. The base frame carries the weight of the support structure and the systems and components attached to the support structure.

The pressure of the wind on the rotor of the wind turbine and the rotation of the rotor and the generator introduce vibrations and loads on the wind turbine. The vibrations are transferred from the rotor and the generator to the base frame of the nacelle. The vibrations are also transferred through the base frame to the systems and components mounted to the support structure.

The vibrations cause stress in the systems and components mounted to the support structure that is fixed to the base frame. The stress is especially high when a vibration with a resonant frequency of a component is introduced.

The vibrations in the nacelle reduce the life-time of the systems and components and lead to an increased number of forced shut-downs and shortened service intervals of the wind turbine.

Vibrations decrease the reliability of the wind turbine and have to be avoided or reduced.

The base frame of the wind turbine is build heavy and rigid to withstand the loads of the wind turbine rotor.

Several passive and active methods are known to restrain the vibrations in the nacelle of the wind turbine. One method known is to eliminate the vibrations by pitching the rotor blades in a way that inverse vibrations are introduced in the system and the original vibrations are extinguished.

It is also known to reduce the wind turbine load by pitching the blades. This leads to a loss in energy production.

Also damping means in the upper part of the tower are known. Additional damping material is heavy and leads to heavier and more expensive components.

The aim of the invention is therefore to provide an improved base frame for a wind turbine that allows less vibration in the systems and components in the nacelle.

The aim is reached by the features of the independent claim. Preferred embodiments of the invention are described in the dependent claims.

A base frame for a nacelle of a direct driven wind turbine comprises a first interface that is prepared and arranged for a connection of a rotor arrangement of the wind turbine with the first interface. A second interface is prepared and arranged for a connection of a tower of the wind turbine with the second interface.

An intermediate part connects the first and the second interface, wherein the intermediate part is prepared and arranged for the transfer of loads or vibrations between the rotor arrangement and the tower.

The rotational axis of the rotor arrangement and the longitudinal axis of the tower define a first plane, which is oriented mainly vertical.

The second interface comprises a collar structure, which is prepared and arranged for a connection with at least one yaw-drive being used to turn the nacelle of the wind turbine.

A third interface is prepared and arranged to attach a support structure to the base frame, while the support structure is capable to carry additional electrical and mechanical equipment of the wind turbine.

The third interface exclusively comprises a first connection-area and a second connection-area. The first connection area is prepared to connect the third interface with the collar structure. The second connection-area is prepared to connect the third interface via a rib with the intermediate part of the base frame.

The rib extends along a plane which is mainly parallel to the first plane. The rib is attached to the surface of the intermediate part in a way that the rib transfers drag forces from the third interface to the intermediate part.

The first connection-area is prepared to transfer mainly vertical forces from the third interface to the tower. Thus the transfer of loads or vibrations from the intermediate part towards the third interface is minimized.

The base frame comprises a first interface, a second interface and an intermediate part connecting the two interfaces.

A first interface of the base frame is prepared and arranged in a way that a rotor arrangement can be connected to the first interface. A rotor arrangement comprises a rotor hub and rotor blades. The rotor arrangement can also comprise a rotor of a generator. The first interface can comprise a flange where the rotor arrangement is connected.

A second interface of the base frame is prepared and arranged in a way that a tower can be connected to the second interface. The base frame of the wind turbine is rotatable connected to the tower, whereby the base frame is rotatable around the longitudinal axis of the tower.

Yaw motors are installed at the base frame to rotate the base frame in respect to the tower. The second interface comprises a structure, to support the yaw motors. In this case the structure is arranged at least partially along the rim of the second interface. This arrangement is a kind of a collar structure, also called a sleeve, that is arranged at least partially at the outer perimeter of the base frame. This collar structure provides a platform, where yaw motors can be attached to.

Additional electrical equipment can be arranged on a support structure that carries the equipment.

A third interface is prepared and arranges in a way that a support structure can be connected to the base frame. The third interface connects the support structure to the base frame and is therefore also called a support structure interface.

A first plane is defined by the rotational axis of the rotor arrangement and the longitudinal axis of the tower of the wind turbine. This first plane is a vertically oriented plane cutting through the nacelle, the rotor arrangement and the tower of the wind turbine. This first plane can be defined for all wind turbines with a so called "horizontal axis" of rotation of the rotor arrangement, whereby a "horizontal axis" wind turbine comprises an axis of rotation that can be horizontal or to a certain degree tilted in respect to a horizontal orientation. This definition excludes vertical axis wind turbines that comprise a vertical axis of rotation.

The rotation of the rotor arrangement and the wind load on the rotor lead to loads and vibrations in the rotor arrangement, that are transferred over the base frame to the tower. This leads to vibrations in the base frame of the wind turbine. The vibrations are transferred from the first interface over the intermediate part to the second interface. The vibrations are therefore mainly present in the first and the second interface and in the intermediate part.

Additional equipment that is attached to the intermediate part experiences the vibrations. Vibrations are normally unwanted and need to be avoided.

The support structure interface is exclusively attached to the base frame via two connection-areas. The first connection-area connects the support structure interface to the collar structure of the second interface. The first connection-area transfers mainly vertical forces from the support structure to the base frame.

In addition the first connection area transfers horizontal forces, also called transversal forces acting as side forces, from the support structure to and from the base frame.

The collar structure experiences less and different vibrations than the intermediate Part of the base frame or the second interface.

The second connection area connects the support structure interface to a rib. The rib is adapted to the surface of the intermediate part and is leading along the surface of the intermediate part. The rib is connected to the surface of the intermediate part.

Thus the support structure interface shows no direct connection to the intermediate part of the base frame. Thus the support structure interface is mainly decoupled from the intermediate part. Thus vibrations present in the intermediate part can not directly be transferred from the intermediate part to the support structure interface. Thus the vibrations can only indirectly be transferred to the support structure interface over the collar structure and the rib. Through the rib less vibrations are transferred to the third interface, then via a direct coupling between the third interface and the intermediate part. Thus the amount of vibrations transferred depends on the form and structure of the collar structure and the rib.

The rib transfers mainly drag forces from the support structure interface to the base frame. The rib is mainly oriented in a plane that is parallel to the first plain. Thus the rib transfers mainly forces that are oriented in the plane of the rib. Thus forces oriented perpendicular to the rib are mainly not transferred or transferred to a lower degree. Thus the transfer of vibrations over the rib to the support structure interface can be minimized and can mainly be limited to a certain amount of vibration in the direction of the plane of the rib.

The collar structure is oriented mainly horizontally and shows a certain flexibility compared to the intermediate part. Thus only a limited amount of vibrations are transferred from the intermediate part of the base frame over the collar structure to the support structure interface.

Thus the vibrations transferred from the base frame to the support structure interface are minimized. Thus the amount of vibration experienced by additional equipment attached to the support structure interface is minimized. Thus the stress for the additional equipment is minimized. Thus the lifetime of the additional equipment is improved. Thus the probability for a shut down due to a failure in the additional equipment is minimized. Thus the reliability of the wind turbine in increased and the costs for service are reduced. Downtime of the wind turbine is minimized.

The rib comprises a connection to the intermediate part of the base frame, while the rib is leading along the surface of the intermediate part and the heights of the rib decreases along its length with the increasing distance from the third interface.

The rib is designed in a way to transfer drag forces from the third interface to the intermediate part. The rib is leading along the interface of the intermediate part and comprises a connection to the intermediate part. When the rib is connected to the intermediate part, the forces present in the rib decrease along its length with an increasing distance from the third interface.

Thus the heights of the rib, and in parallel the cross section of the rib, can decrease with an increasing distance from the third interface. Thus material is saved and the flexibility of the rib is increased.

The rib shows a certain flexibility. The rib is connected along the surface of the intermediate part, at different distances from the third interface and at different places at the surface along the intermediate part. Thus vibrations induced from the intermediate part to the rib are from different points along the surface of the intermediate part.

Thus the vibrations induced are of different amplitude and phase angle. Thus the risk of inducing a resonance frequency of the rib, the third interface or any part of the support structure is low.

Thus the chances that vibrations of different phase angle induced into the rib eliminate each other are high. Thus the amount of vibrations transferred from the intermediate part to the third interface is low.

The collar structure comprises a first surface that is mainly perpendicular to the longitudinal axis of the tower, and the third interface is attached to the first surface.

Thus the collar structure shows a horizontal expansion. The collar structure comprises an upper and a lower surface that is perpendicular to the longitudinal axis of the tower. The third interface can be attached to the upper and/or the lower surface of the collar structure.

Preferably the third interface is attached to the upper surface of the collar structure that is mainly perpendicular to the longitudinal axis of the tower. Thus the third interface is resting on the upper surface of the collar structure. Thus the weight of a support structure connected to the third interface can be carried by the collar structure as the third interface is resting on the collar structure.

The third interface attached to the collar structure is positioned in a location along the collar structure, which shows a minimum of vibrations during the operation of the wind turbine, so that the vibrations transferred from the intermediate part to the third interface are minimized.

The base frame shows a certain pattern of vibrations that are transferred from the first interface to the second interface. The pattern of vibrations of the base frame shows different spots on the surface of the base frame that show an especially high load of vibrations.

Also the collar structure shows a certain pattern with high and low loads of vibrations. The load of vibration for different spots on the surface of the base frame and the collar structure can be either measured or calculated.

The connection area between the third interface and the collar structure is preferably at a spot with a low load of vibration. Thus only few vibrations are transferred from the collar structure to the third interface.

The third interface comprises a flange plate that is prepared and arranged to attach a support structure to the third interface.

A flange plate can be a standardized element that can be used to attach different kinds of support structures to a base frame. Thus the base frame can be used for different types of support structures and thus also for different types or sizes of wind turbines.

The flange plate of the third interface is prepared and arranged to be connected to a beam of a support structure.

A support structure to be connected with the third interface can comprise a closed frame structure. A closed frame structure is heavy. Also the stiffness of a closed frame might not be necessary for the support structure.

Thus only a beam of the support structure is connected to the third interface. Thus the support structure can comprise one of more beams carrying equipment attached to the support structure.

The flange plate of the third interface is prepared to be connected with the support structure by bolts.

The flange plate and the support structure can be connected by different means. A connection by bolts shows the advantage, that the connection in rigid but also detachable.

The base frame comprises at least two third interfaces.

Thus the two third interfaces can carry two support structures or two parts, for example two beams, of one support structure.

Two third interfaces are connected by a bar, whereby the bar is leading from a first third interface flange plate to a second third interface flange plate.

Thus the movement of the two third interface flange plate relative to each other is limited. Thus the distance between the two flange plates is defined by the bar.

The first interface comprises a first connecting surface to connect to the rotor arrangement and the second interface comprises a second connecting surface to connect to the tower, and the first and the second connecting surface are arranged in an angle of less than 90° to each other.

The first connection surface is mainly perpendicular to the axis of rotation of the rotor arrangement. The second connecting surface is mainly perpendicular to the longitudinal axis of the tower. When the angel between the two connecting surfaces is less than 90° the rotor arrangement is tilted in respect to a purely horizontal axis. Thus the rotor of the wind turbine is no longer arranged purely horizontal.

As experience shows, the angel attack of moving air is not purely vertical. The angle of attach is tilted in respect to a purely vertical plane in a way that the more upper area of the moving air arrives at the rotor plane of a purely horizontal axis rotor first. The lower part of the moving air arrives at the rotor later.

When the rotor of the wind turbine is tilted upward in respect to the purely horizontal orientation of the axis of the rotor, the wind will arrive more simultaneously at the plane of the rotor.

The angle between the first connecting surface and the second connecting surface is between 83° and 85°.

Thus the rotor arrangement that is connected to the first interface shows the optimum tilt angle in respect to the tower.

Thus the angle is in a optimal range for the moving air to attack more simultaneously at the plane of the rotor.

The intermediate part that connects the first and the second interface is hollow, so that the interior of the intermediate part is accessible.

Thus electrical equipment like cables can be places within the structure of the base frame. The access for service and maintenance is improved and the structure of the base frame is more lightweight in respect to a solid construction.

The rib is attached to the surface of the intermediate part of the base frame while it is leading upward along the surface of the intermediate part.

Thus the rib can take the drag forces of the support structure very easily. The rib can transfer the lever forces of the support structure more easily to the intermediate part of the base frame. Thus the rib can be built with less material than a straight rib.

In addition the rib that is attached to the surface of the intermediate part increases the resonance frequency of the base frame of the wind turbine. Thus the resonance frequency of the base frame can be influenced by the design of the form and the length of the rib.

A nacelle for a direct driven wind turbine comprises a base frame as described above.

A direct driven wind turbine comprises a base frame as described above.

The invention is shown in more detail by the help of figures. The figures show a preferred configuration and do not limit the scope of the invention.

FIG 1 shows a base frame for a direct driven wind turbine.

FIG 2 shows the base frame 1 in a second perspective view.

FIG 3 shows a side view of the base frame 1.

FIG 4 shows the base frame 1 seen from above.

FIG 5 shows the base frame 1.

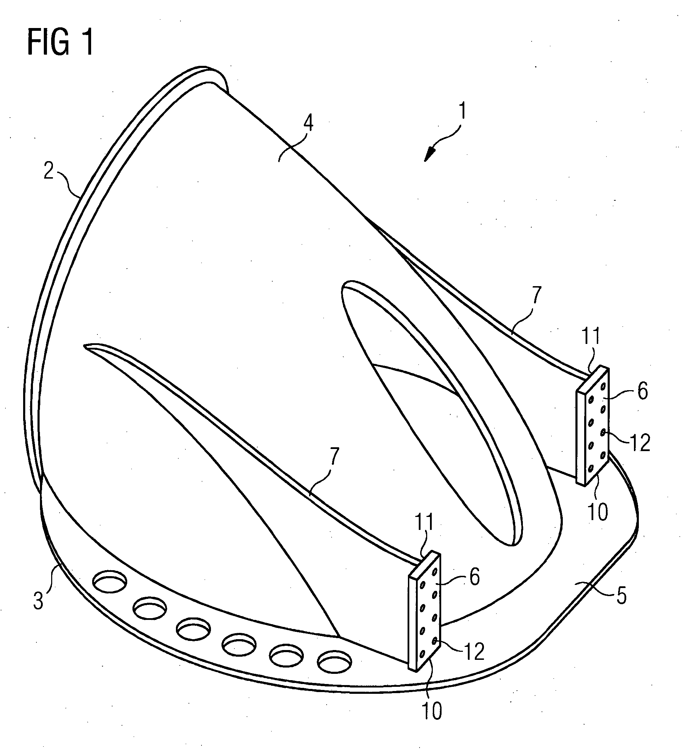

FIG 1 shows a base frame 1 for a direct driven wind turbine in a perspective view. The base frame 1 comprises a rotor interface 2 to connect a rotor arrangement of the wind turbine.

The base frame 1 comprises a tower interface 3 to connect the base frame 1 to a tower of the wind turbine.

An intermediate part 4 connects the rotor interface 2 and the tower interface 3. The intermediate part 4 transfers the forces and the loads of the rotor arrangement from the rotor interface 2 to the tower interface 3. The intermediate part 4 also carries the weight of the rotor arrangement of the wind turbine.

The tower interface 3 comprises a collar structure 5. In this embodiment the collar structure 5 is prepared in a way that yaw-motors can be attached to the collar structure 5. Yaw-motors are used to rotate the base frame 1 together with the rotor arrangement in respect to the tower around a mainly vertical axis.

This is necessary to adjust the direction of the axis of rotation of the rotor of the wind turbine in respect to the direction of the wind.

The base frame 1 comprises a support structure interface 6. This support structure interface is used to attach a support structure 6 to the base frame 1. A support structure can be used for additional electrical installations, like electrical cabinets, for the controller of the wind turbine or the transformer for example.

In this embodiment the support structure interface 6 comprises flange plates 12, so that the support structure can be connected to the flange plates 12. The embodiment comprises two interfaces 6 to connect to a support structure.

During the operation of the wind turbine the rotor of the wind turbine experiences a varying amount of vibration. The vibrations can vary in frequency and amplitude. The vibrations are transferred from the rotor arrangement over the rotor interface 2 to the intermediate structure 4. From there the vibrations are transferred over the tower interface 3 to the tower of the wind turbine and from there to the foundation and the ground.

The vibration can also be transferred to additional equipment attached to the base frame 1.

Vibrations are generally a problem for electrical cabinets and electrical installations, as they decrease the lifetime of the components. Thus the support structure attached to the support structure interface 6 should experience as few vibrations as possible.

Therefore the support structure interface 6 needs to be as good as possible decoupled from the base frame 1 regarding vibrations.

The support structure interface 6 is exclusively attached to the base frame 1 by a first connection-area 10 and a second connection-area 11.

The first connection-area 10 connects the support structure interface 6 to the collar structure 5 of the tower interface 3.

The second connection-area 11 connects the support structure interface 6 to a rib 7. The rib 7 leads along the collar structure 3 and the intermediate part 4 of the base frame 1. The support structure interface 6 is connected via the rib 7 to the intermediate part 4 of the base frame 1. The support structure interface 6 is only indirectly connected to the intermediate part 4. A first connection is achieved by the first connection-area 10 of the support structure interface 6 over the collar structure 5 to the intermediate part 4. A second connection connects the support structure interface 6 by the second connection-area 11 via the rib 7 to the intermediate part 4. So the support structure interface 6 is at no place connected directly to the intermediate part 4.

A first plane is defined by the axis of rotation of the rotor of the wind turbine and the longitudinal axis of the tower of the wind turbine.

The plane of the rib 7 is oriented mainly parallel to the first plane. So the rib 7 is oriented mainly parallel to the axis off rotation of the rotor of the wind turbine.

Due to its orientation, the rib 7 is capable to transfer the tilting moment, resulting from the weight of the support structure, from the support structure interface 6 to the intermediate part 4 of the base frame 1.

The support structure interface is only indirectly connected to the intermediate part 4 of the base frame 1. Thus the vibrations present in the intermediate part 4 can by only indirectly transferred from the intermediate part 4 to the support structure interface 6.

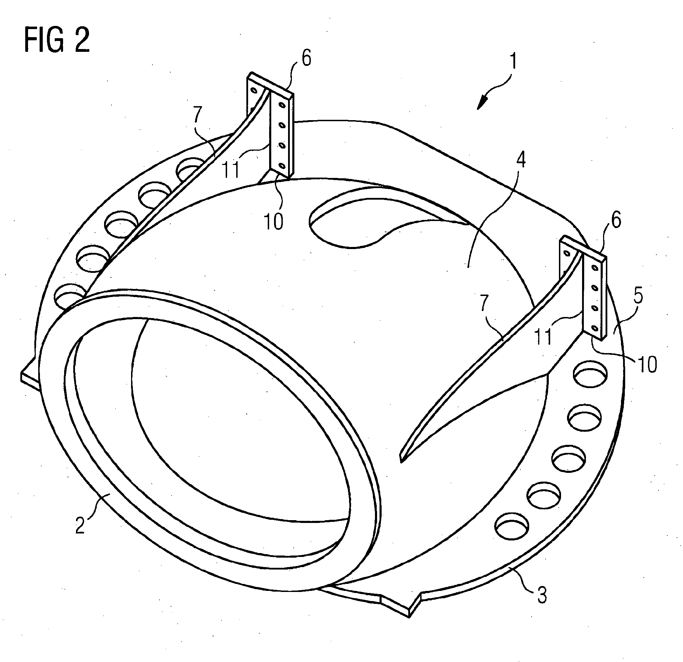

FIG 2 shows the base frame 1 in a second perspective view.

The base frame 1 comprises a rotor interface 2 and a tower interface 3. The tower interface 3 comprises a collar structure 5. The support structure interface 6 is connected to the collar structure 5 and via a rib 7 to the intermediate part 4 of the base frame 1.

The support structure interface 6 shows no direct connection to the intermediate part 4 of the base frame 1. The support structure interface 6 is only indirectly connected to the intermediate part 4. A first connection is achieved via an first connection-area 10 that connects the support structure interface 6 to the collar structure 5 of the tower interface 3.

A second connection is established via an second connection area 11 to a rib 7. The rib 7 is connected to the intermediate part 4 of the base frame 1.

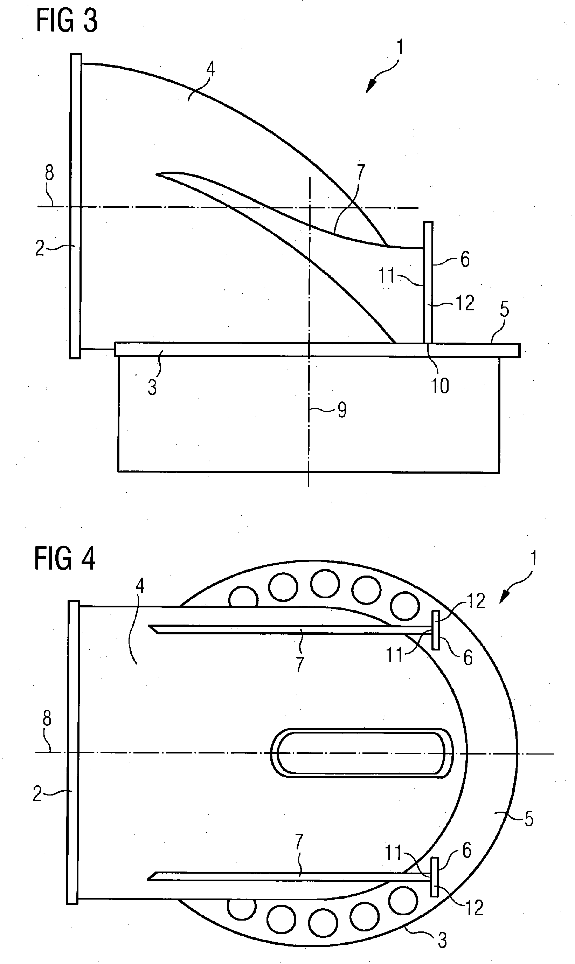

FIG 3 shows a side view of the base frame 1.

The base frame 1 comprises a rotor interface 2 to connect a rotor arrangement to the base frame 1. The rotation of the rotor of the wind turbine defines an axis of rotation.

The base frame 1 comprises a tower interface 3 to connect a tower to the base frame 1. The tower comprises a longitudinal axis 9 when it is connected to the base frame 1.

The axis of rotation 8 and the longitudinal axis of the tower 9 define a first plane.

A support structure interface 6 is connected to the collar structure 5 of the tower interface 3 and via a rib 7 to the intermediate part 4 of the base frame.

The support structure interface 6 comprises a first connection-area 10 to connect to the collar structure 5 and a second connection area 11 to connect to the rib 7.

The rib 7 is leading along the surface of the intermediate part 4 of the base frame 1. The rib 7 shows a decreasing height along its length from the support structure interface 6 to its end at the intermediate part 4.

An axis of rotation of the rotor arrangement 8 and a longitudinal axis of the tower 9 define a first plane.

FIG 4 shows the base frame 1 seen from above.

The base frame 1 comprises a rotor interface 2 and a tower interface 3. The tower interface 3 comprises a collar structure 5. The support structure interface 6 is connected to the collar structure 5 of the tower interface 5 and via a rib 7 to the intermediate part 4 of the base frame 1. The support structure interface 6 is connected via a first connection-area 10 to the collar structure 5 and via a second connection area 11 to the rib 7. The support structure interface 6 shows no direct connection to the intermediate pat 4. The support structure interface is only indirectly connected to the intermediate part 4. The support structure interface is exclusively connected via the first connection-area 10 to the collar structure 5 and via the second connection-area 11 to the rib 7.

The rotor arrangement is connected to the rotor interface 2. An axis 8 is defined by the rotational axis of the rotor of the wind turbine.

The rib 7 is leading along the intermediate part 4 of the base frame 1. The length of the rib 7 is mainly arranged parallel to the axis of rotation of the rotor arrangement.

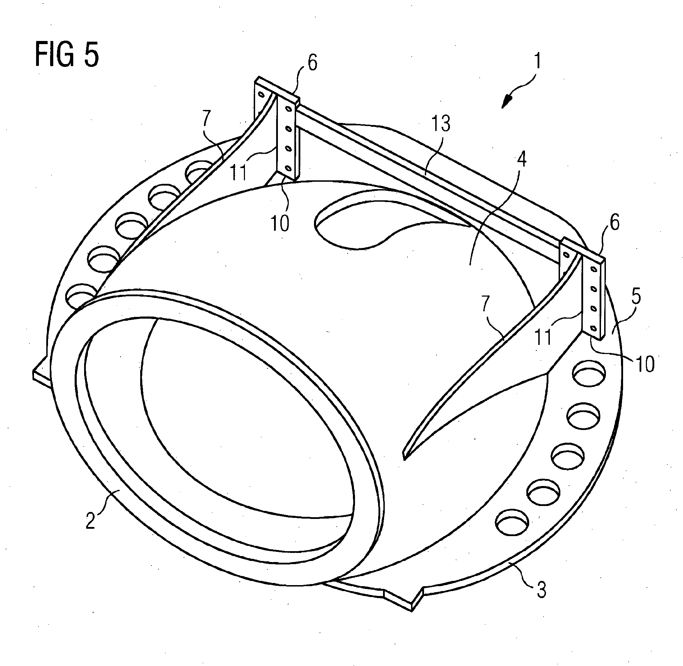

FIG 5 shows the base frame 1.

FIG 5 shows the bed frame 1 as described in FIG 2. The base frame 1 in this embodiment comprises two third interfaces 6. The two interfaces 6 comprise each a flange plate 12 to connect to a support structure.

The two third interfaces 6 are connected by a bar 13.

## Claims

1. Base frame (1) for a nacelle of a direct driven wind turbine, comprising
- a first interface (2) that is prepared and arranged for a connection of a rotor arrangement of the wind turbine with the first interface (2),
- a second interface (3) that is prepared and arranged for a connection of a tower of the wind turbine with the second interface (3),
- an intermediate part (4), which connects the first (2) and the second interface (3), wherein the intermediate part (4) is prepared and arranged for the transfer of loads or vibrations between the rotor arrangement and the tower,
- wherein the rotational axis of the rotor arrangement and the longitudinal axis of the tower define a first plane, which is oriented mainly vertical,
- wherein the second interface (3) comprises a collar structure (5), which is prepared and arranged for a connection with at least one yaw-drive being used to turn the nacelle of the wind turbine,
- a third interface (6) that is prepared and arranged to attach a support structure to the base frame (1), while the support structure is capable to carry additional electrical and mechanical equipment of the wind turbine,
- wherein the third interface (6) comprises a flange plate (12) that is prepared and arranged to attach a support structure to the third interface (6),
- wherein the third interface (6) exclusively comprises a first connection-area (10) and a second connection-area (11),
- wherein the first connection area (10) is prepared to connect the third interface (6) with the collar structure (5),
- wherein the second connection-area (11) is prepared to connect the third interface (6) via a rib (7) with the intermediate part (4) of the base frame (1),
- wherein the rib (7) extends along a plane which is mainly parallel to the first plane
**characterized in that**
- the rib (7) leads along the collar structure (3) and the intermediate part (4) of the base frame (1),
- wherein the rib (7) is attached to the surface of the intermediate part (4) of the base frame (1) while it is leading upward along the surface of the intermediate part (4),
- wherein the rib (7) is attached to the surface of the intermediate part (4) in a way that the rib (7) transfers drag forces from the third interface (6) to the intermediate part (4),
- wherein the first connection-area (10) is prepared to transfer mainly vertical forces from the third interface (6) to the tower,
- thus the transfer of loads or vibrations from the intermediate part (4) towards the third interface (6) is minimized.

2. Base frame (1) according to claim 1, wherein the rib (7) comprises a connection to the intermediate part (4) of the base frame (1), while the rib (7) is leading along the surface of the intermediate part (4) and the heights of the rib (7) decreases along its length with the increasing distance from the third interface (6).

3. Base frame (1) according to claim 1 or 2, wherein the collar structure (5) comprises a first surface that is mainly perpendicular to the longitudinal axis of the tower, and the third interface (6) is attached to the first surface.

4. Base frame (1) according to one of the preceding claims, wherein the third interface (6) attached to the collar structure (5) is positioned in a location along the collar structure (5), which shows a minimum of vibrations during the operation of the wind turbine, so that the vibrations transferred from the intermediate part (4) to the third interface (6) are minimized.

5. Base frame (1) according to one of the claims 1, wherein the flange plate (12) of the third interface is prepared and arranged to be connected to a beam of a support structure.

6. Base frame (1) according to one of the claims 1 to 5, wherein the flange plate (12) of the third interface (6) is prepared to be connected with the support structure by bolts.

7. Base frame (1) according to one of the preceding claims, wherein the base frame (1) comprises at least two third interfaces (6).

8. Base frame (1) according to claim 7, wherein two third interfaces (6) are connected by a bar (13), whereby the bar (13) is leading from a first third interface flange plate (12) to a second third interface flange plate (12).

9. Base frame (1) according to one of the preceding claims, wherein the first interface (2) comprises a first connecting surface to connect to the rotor arrangement and the second interface (3) comprises a second connecting surface to connect to the tower, and the first and the second connecting surface are arranged in an angle of less than 90° to each other.

10. Base frame (1) according to claim 9, wherein the angle between the first connecting surface and the second connecting surface is between 83° and 85°.

11. Base frame (1) according to one of the preceding claims, wherein the intermediate part (4) that connects the first (2) and the second interface (3) is hollow, so that the interior of the intermediate part (4) is accessible.

12. Nacelle for a direct driven wind turbine comprising a base frame (1) according to one of the claims 1 to 11.

13. Direct driven wind turbine comprising a base frame (1) according to one of the claims 1 to 11.

## Patentansprüche

1. Grundrahmen (1) für eine Gondel einer Windenergieanlage mit Direktantrieb, welcher umfasst:
- eine erste Schnittstelle (2), welche für eine Verbindung einer Rotoranordnung der Windenergieanlage mit der ersten Schnittstelle (2) ausgelegt und eingerichtet ist,
- eine zweite Schnittstelle (3), welche für eine Verbindung eines Turms der Windenergieanlage mit der zweiten Schnittstelle (3) ausgelegt und eingerichtet ist,
- einen Zwischenteil (4), welcher die erste (2) und die zweite Schnittstelle (3) verbindet, wobei der Zwischenteil (4) für die Übertragung von Lasten oder Schwingungen zwischen der Rotoranordnung und dem Turm ausgelegt und eingerichtet ist,
- wobei die Drehachse der Rotoranordnung und die Längsachse des Turms eine erste Ebene definieren, welche im Wesentlichen vertikal ausgerichtet ist,
- wobei die zweite Schnittstelle (3) eine Kragenstruktur (5) umfasst, welche für eine Verbindung mit mindestens einem Gierantrieb ausgelegt und eingerichtet ist, der verwendet wird, um die Gondel der Windenergieanlage zu drehen,
- eine dritte Schnittstelle (6), welche dafür ausgelegt und eingerichtet ist, eine Stützstruktur an dem Grundrahmen (1) zu befestigen, wobei die Stützstruktur in der Lage ist, zusätzliche elektrische und mechanische Ausrüstung der Windenergieanlage zu tragen,
- wobei die dritte Schnittstelle (6) eine Flanschplatte (12) umfasst, welche dafür ausgelegt und eingerichtet ist, eine Stützstruktur an der dritten Schnittstelle (6) zu befestigen,
- wobei die dritte Schnittstelle (6) ausschließlich einen ersten Verbindungsbereich (10) und einen zweiten Verbindungsbereich (11) umfasst,
- wobei der erste Verbindungsbereich (10) dafür ausgelegt ist, die dritte Schnittstelle (6) mit der Kragenstruktur (5) zu verbinden,
- wobei der zweite Verbindungsbereich (11) dafür ausgelegt ist, die dritte Schnittstelle (6) über eine Rippe (7) mit dem Zwischenteil (4) des Grundrahmens (1) zu verbinden,
- wobei sich die Rippe (7) entlang einer Ebene erstreckt, welche im Wesentlichen parallel zu der ersten Ebene ist,
**dadurch gekennzeichnet, dass**
- die Rippe (7) an der Kragenstruktur (3) und dem Zwischenteil (4) des Grundrahmens (1) entlangführt,
- wobei die Rippe (7) an der Oberfläche des Zwischenteils (4) des Grundrahmens (1) befestigt ist, während sie entlang der Oberfläche des Zwischenteils (4) nach oben führt,
- wobei die Rippe (7) an der Oberfläche des Zwischenteils (4) auf eine solche Weise befestigt ist, dass die Rippe (7) Schleppkräfte von der dritten Schnittstelle (6) auf den Zwischenteil (4) überträgt,
- wobei der erste Verbindungsbereich (10) dafür ausgelegt ist, im Wesentlichen vertikale Kräfte von der dritten Schnittstelle (6) auf den Turm zu übertragen,
- wodurch die Übertragung von Lasten oder Schwingungen von dem Zwischenteil (4) in Richtung der dritten Schnittstelle (6) minimiert wird.

2. Grundrahmen (1) nach Anspruch 1, wobei die Rippe (7) eine Verbindung zu dem Zwischenteil (4) des Grundrahmens (1) umfasst, während die Rippe (7) an der Oberfläche des Zwischenteils (4) entlangführt, und die Höhe der Rippe (7) sich entlang ihrer Länge mit zunehmendem Abstand von der dritten Schnittstelle (6) verringert.

3. Grundrahmen (1) nach Anspruch 1 oder 2, wobei die Kragenstruktur (5) eine erste Fläche umfasst, welche im Wesentlichen senkrecht zur Längsachse des Turms ist, und die dritte Schnittstelle (6) an der ersten Fläche befestigt ist.

4. Grundrahmen (1) nach einem der vorhergehenden Ansprüche, wobei die dritte Schnittstelle (6), die an der Kragenstruktur (5) befestigt ist, an einem Ort entlang der Kragenstruktur (5) positioniert ist, welcher während des Betriebs der Windenergieanlage ein Minimum von Schwingungen aufweist, so dass die Schwingungen, die von dem Zwischenteil (4) auf die dritte Schnittstelle (6) übertragen werden, minimiert werden.

5. Grundrahmen (1) nach Anspruch 1, wobei die Flanschplatte (12) der dritten Schnittstelle dafür ausgelegt und eingerichtet ist, mit einem Träger einer Stützstruktur verbunden zu werden.

6. Grundrahmen (1) nach einem der Ansprüche 1 bis 5, wobei die Flanschplatte (12) der dritten Schnittstelle (6) dafür ausgelegt ist, mit der Stützstruktur durch Bolzen verbunden zu werden.

7. Grundrahmen (1) nach einem der vorhergehenden Ansprüche, wobei der Grundrahmen (1) mindestens zwei dritte Schnittstellen (6) aufweist.

8. Grundrahmen (1) nach Anspruch 7, wobei die zwei dritten Schnittstellen (6) durch eine Stange (13) verbunden sind, wobei die Stange (13) von einer Flanschplatte (12) der ersten dritten Schnittstelle zu einer Flanschplatte (12) der zweiten dritten Schnittstelle führt.

9. Grundrahmen (1) nach einem der vorhergehenden Ansprüche, wobei die erste Schnittstelle (2) eine erste Verbindungsfläche zum Verbinden mit der Rotoranordnung umfasst und die zweite Schnittstelle (3) eine zweite Verbindungsfläche zum Verbinden mit dem Turm umfasst, und wobei die erste und die zweite Verbindungsfläche in einem Winkel von weniger als 90° zueinander angeordnet sind.

10. Grundrahmen (1) nach Anspruch 9, wobei der Winkel zwischen der ersten Verbindungsfläche und der zweiten Verbindungsfläche zwischen 83° und 85° liegt.

11. Grundrahmen (1) nach einem der vorhergehenden Ansprüche, wobei der Zwischenteil (4), welcher die erste (2) und die zweite Schnittstelle (3) verbindet, hohl ist, so dass das Innere des Zwischenteils (4) zugänglich ist.

12. Gondel für eine Windenergieanlage mit Direktantrieb, welche einen Grundrahmen (1) nach einem der Ansprüche 1 bis 11 umfasst.

13. Windenergieanlage mit Direktantrieb, welche einen Grundrahmen (1) nach einem der Ansprüche 1 bis 11 umfasst.

## Revendications

1. Châssis de base (1) pour une nacelle d'une éolienne à entraînement direct, comprenant
- une première interface (2) qui est préparée et agencée pour un assemblage d'un agencement de rotor de l'éolienne avec la première interface (2),
- une deuxième interface (3) qui est préparée et agencée pour un assemblage d'un mât de l'éolienne avec la deuxième interface (3),
- une partie intermédiaire (4) qui relie la première (2) et la deuxième (3) interface, où la partie intermédiaire (4) est préparée et agencée pour le transfert de charges ou de vibrations entre l'agencement du rotor et le mât,
- où l'axe de rotation de l'agencement de rotor et l'axe longitudinal du mât définissent un premier plan qui est orienté principalement de façon verticale,
- où la deuxième interface (3) comprend une structure de bague d'assemblage (5) qui est préparée et agencée pour un assemblage avec au moins une commande de lacet utilisée pour faire tourner la nacelle de l'éolienne,
- une troisième interface (6) qui est préparée et agencée pour fixer une structure de support sur le châssis de base (1), tandis que la structure de support est capable de supporter un équipement électrique et mécanique supplémentaire de l'éolienne,
- où la troisième interface (6) comprend une plaque à bride (12) qui est préparée et agencée pour fixer une structure de support sur la troisième interface (6),
- où la troisième interface (6) comprend exclusivement une première zone d'assemblage (10) et une seconde zone d'assemblage (11),
- où la première zone d'assemblage (10) est préparée pour relier la troisième interface (6) à la structure de bague d'assemblage (5),
- où la seconde zone d'assemblage (11) est préparée pour relier la troisième interface (6), via une nervure (7), à la partie intermédiaire (4) du châssis de base (1),
- où la nervure (7) s'étend le long d'un plan qui est principalement parallèle au premier plan,
**caractérisé en ce que**
- la nervure (7) s'étend le long de la structure de bague d'assemblage (3) et de la partie intermédiaire (4) du châssis de base (1),
- où la nervure (7) est fixée sur la surface de la partie intermédiaire (4) du châssis de base (1), tandis que ladite nervure s'étend vers le haut, le long de la surface de la partie intermédiaire (4),
- où la nervure (7) est fixée sur la surface de la partie intermédiaire (4), de manière telle que la nervure (7) transfère des forces de traînée, depuis la troisième interface (6) jusqu'à la partie intermédiaire (4),
- où la première zone d'assemblage (10) est préparée pour transférer principalement des forces verticales, depuis la troisième interface (6) jusqu'au mât,
- ainsi, le transfert de charges ou de vibrations, depuis la partie intermédiaire (4) vers la troisième interface (6), est minimisé.

2. Châssis de base (1) selon la revendication 1, dans lequel la nervure (7) comprend un assemblage avec la partie intermédiaire (4) du châssis de base (1), tandis que la nervure (7) s'étend le long de la surface de la partie intermédiaire (4), et les hauteurs de la nervure (7) diminuent sur sa longueur, au fur et à mesure que la distance augmente par rapport à la troisième interface (6).

3. Châssis de base (1) selon la revendication 1 ou 2, dans lequel la structure de bague d'assemblage (5) comprend une première surface qui est principalement perpendiculaire à l'axe longitudinal du mât, et la troisième interface (6) est fixée sur la première surface.

4. Châssis de base (1) selon l'une quelconque des revendications précédentes, dans lequel la troisième interface (6) fixée sur la structure de bague d'assemblage (5) est positionnée au niveau d'un emplacement situé le long de la structure de bague d'assemblage (5) qui présente un minimum de vibrations au cours du fonctionnement de l'éolienne, de sorte que les vibrations transférées depuis la partie intermédiaire (4) jusqu'à la troisième interface (6) sont minimisées.

5. Châssis de base (1) selon l'une quelconque des revendications 1 à 4, dans lequel la plaque à bride (12) de la troisième interface est préparée et agencée pour être reliée à une poutre d'une structure de support.

6. Châssis de base (1) selon l'une quelconque des revendications 1 à 5, dans lequel la plaque à bride (12) de la troisième interface (6) est préparée pour être assemblée, par des boulons, avec la structure de support.

7. Châssis de base (1) selon l'une quelconque des revendications précédentes, où le châssis de base (1) comprend au moins deux troisièmes interfaces (6).

8. Châssis de base (1) selon la revendication 7, dans lequel deux troisièmes interfaces (6) sont reliées par une barre (13), faisant que la barre (13) s'étend à partir d'une plaque à bride (12) de la première troisième interface, jusqu'à une plaque à bride (12) de la seconde troisième interface.

9. Châssis de base (1) selon l'une quelconque des revendications précédentes, dans lequel la première interface (2) comprend une première surface d'assemblage pour relier à l'agencement du rotor, et la deuxième interface (3) comprend une seconde surface d'assemblage pour relier au mât, et la première et la seconde surface d'assemblage sont agencées, l'une par rapport à l'autre, suivant un angle inférieur à 90°.

10. Châssis de base (1) selon la revendication 9, dans lequel l'angle formé entre la première surface d'assemblage et la seconde surface d'assemblage est compris entre 83° et 85°.

11. Châssis de base (1) selon l'une quelconque des revendications précédentes, dans lequel la partie intermédiaire (4), qui relie la première (2) et la deuxième (3) interface, est creuse, de sorte que l'intérieur de la partie intermédiaire (4) est accessible.

12. Nacelle pour une éolienne à entraînement direct comprenant un châssis de base (1) selon l'une quelconque des revendications 1 à 11.

13. Eolienne à entraînement direct comprenant un châssis de base (1) selon l'une quelconque des revendications 1 à 11.
